Europäisches Patentamt

European Patent Office

Office européen des brevets

(11) Veröffentlichungsnummer: **0 345 532**

**A2**

(12) # EUROPÄISCHE PATENTANMELDUNG

(21) Anmeldenummer: **89109338.7**

(22) Anmeldetag: **24.05.89**

(51) Int. Cl.⁴: **B23C 3/30**

(30) Priorität: **31.05.88 DE 3818521**

(43) Veröffentlichungstag der Anmeldung:
**13.12.89 Patentblatt 89/50**

(84) Benannte Vertragsstaaten:
**AT BE CH DE ES FR GB GR IT LI LU NL SE**

(71) Anmelder: **Koukal, Anton**
**Schumannweg 9**
**D-7325 Boll(DE)**

(72) Erfinder: **Koukal, Anton**
**Schumannweg 9**
**D-7325 Boll(DE)**

(74) Vertreter: **Lutz, Johannes Dieter, Dr.**
**Hohentwielstrasse 41**
**D-7000 Stuttgart 1(DE)**

(54) **Schneidmaschine für die Herstellung von Zuschnitten vorgegebener Kontur aus einer grossflächigen Bahn eines flexiblen Materials.**

(57) Bei einer Schneidmaschine für die Herstellung von Zuschnitten vorgegebener Kontur aus einer großflächigen Bahn eines flexiblen Materials, insbesondere einer Textilstoffbahn ist als Schneidkopf ein Fräskopf vorgesehen, der mittels eines Koordinaten-Wagens entlang der vorgesehenen Schneidkontur selbsttätig steuerbar verfahrbar ist. Als Fräser ist ein Fingerfräser verwendet, der im Schneidbetrieb die Materialbahn anhebt. Der Fräser tritt durch eine Bohrung einer Platte hindurch, deren unterer Rand als Scherkante ausgebildet ist, welche die Erzielung sauberer Schnittkonturen unterstützt. Bei Verwendung von Fräsern mit einem Nenndurchmesser um 2 mm und einem Antrieb derselben mit Drehzahlen um 150 000 U/min können Vorschub-Geschwindigkeiten von 8 m/min und mehr erreicht werden.

Fig. 1

## Schneidmaschine für die Herstellung von Zuschnitten vorgegebener Kontur aus einer großflächigen Bahn eines flexiblen Materials

Die Erfindung betrifft eine Schneidmaschine für die Herstellung von Zuschnitten vorgegebener Kontur aus einer großflächigen Bahn eines flexiblen Materials, insbesondere einer Textilstoffbahn, die hinsichtlich ihrer Festigkeit einem Segel- oder Zelttuch entsprechende Qualität hat, oder einer Kunststoffbahn hiermit vergleichbarer Flexibilität und Festigkeit, mit einem mittels eines Koordinatenwagens selbsttätig gesteuert entlang der vorgesehenen Schnittkontur verfahrbaren Schneidkopf.

Eine derartige Schneidmaschine ist durch die DE-OS 31 34 009 bekannt.

Die bekannte Schneidmaschine entspricht, ihrem grundsätzlichen Aufbau nach, einer Stichsäge, durch deren Zahnung eine Ebene markiert ist, die stets in die Schnittrichtung orientiert werden muß.

Es ist daher zum einen eine um eine vertikale Achse drehbare Anordnung des Schneidkopfes notwendig, und es muß zusätzlich zu den X- und Y-Antrieben des Koordinatenwagens, durch deren überlagernde Antriebs-Ansteuerung die Stützkontur-Verfolgung des Schneidkopfes erzielt wird, auch ein Orientierungs-Antrieb vorgesehen sein, der das Schneidwerkzeug stets in die erforderliche Schnittrichtung orientiert.

Der damit insgesamt konstruktive und steuerungstechnische Aufwand ist erheblich und mit entsprechend hohen Investitionskosten verknüpft.

Da das Schneidwerkzeug periodische Auf- und Abbewegungen ausführt, deren Widerholungsfrequenz notwendigerweise auf einen relativ niedrigen Wert beschränkt ist, kann die bekannte Schneidmaschine auch nur mit relativ geringen Vorschub-Geschwindigkeiten betrieben werden, was zur Folge hat, daß ein einigermaßen rationeller Einsatz dieser Schneidmaschine allenfalls dann möglich ist, wenn mit dieser "gleichzeitig" eine Mehrzahl identischer Zuschnitte hergestellt wird, derart, daß mehrere Rohmaterialbahnen, in einem Stapel übereinander liegend, der Schneid-Berbeitung unterworfen werden.

Die bekannte Schneidmaschine ist daher allenfalls für eine industrielle Fertigung von Konfektions-Kleidungsstücken geeignet, die mit identischer Ausbildung in großen Stückzahlen hergestellt werden, keinesfalls jedoch für eine mehr handwerkliche Zuschneide-Bearbeitung von Textilstoff- oder Kunststoffbahnen, aus denen z. B. Markisen für Schaufenster oder Balkone, Vorzelte für Campingwagen, Segel für kleine Yachten, die sehr unterschiedliche Größen haben können, Zelte und dergleichen in Einzelfertigung oder in relativ kleinen Stückzahlen hergestellt werden sollen.

Aufgabe der Erfindung ist es daher, eine Schneidmaschine der eingangs genannten Art zu schaffen, die bei gleichwohl guter Eignung für eine Fertigung von Zuschnitten in großen Stückzahlen auch eine rationelle Fertigung von Zuschnitten in kleinen Stückzahlen, z. B. im Sinne einer handwerklichen Einzelfertigung ermöglicht und dabei trotzdem wesentlich einfacher aufgebaut und billiger herstellbar ist.

Diese Aufgabe wird erfindungsgemäß durch die im kennzeichnenden Teil des Patentanspruch 1 genannten Merkmale gelöst.

Hiernach ist als Schneidwerkzeug ein rotierender Fingerfräser vorgesehen, dessen spiralförmige Schneidkanten so bezüglich der Drehrichtung orientiert sind, daß die Materialbahn, die mittels des Fräsers durchschnitten wird, dadurch angehoben, das heißt von ihrer Unterlage abgehoben wird. Der Fräser ist im mittleren Abschnitt seiner Nutung bzw. seiner spiralförmig verlaufenden Schneidkanten von der Wand einer Bohrung umgeben, deren unterer Rand, bis zu welchem die Materialbahn allenfalls angehoben wird, als scharfe Scherkante ausgebildet ist, an welcher vom Schnittrand des Zuschnittes gegebenenfalls abstehende Faserreste oder dergleichen abgeschert werden, so daß saubere, gleichsam ¨glatte" Schnitt- bz. Konturenränder des Zuschnitt-Stückes erzielt werden, wobei zu diesem Zweck durch die Merkmale des Anspruchs 2 günstige Durchmesserrelationen der den Fräser umgebenden Bohrung zu dessen Nenn-Durchmesser angegeben sind.

Mit Fräsern, die einen Nenn-Durchmesser um 2 mm haben und mit Drehzahlen zwischen 100 000 und 200 000 U/mmin antreibbar sind, wobei als Antrieb eine kleine Druckluft-Turbine ausreicht, die eine Leistung um 500 Watt abgibt und aus einer üblichen Preßluft-Quelle, die auf einem Ausgangsdruckniveau um 6 bar arbeitet, betrieben werden kann, können Vorschubgeschwindigkeiten von 8 m/min und mehr mühelos erreicht werden. Die erfindungsgemäße Schneidmaschine ist daher sowohl für eine "Serienfertigung" einer Mehrzahl identischer Teile als auch für eine handwerkliche Fertigung von Einzelstücken sehr gut geeignet.

An einer gemäß Anspruch 4 vorgesehenen, höhenverstellbaren, der Grundform nach topfförmigen Hülse, an deren Bodenplatte die Bohrung angeordnet ist, durch die der Fräser hindurch tritt, kann auch auf einfache Weise ein gemäß Anspruch 5 vorgesehener Niederhaltering angebracht werden, durch den eine Faltenbildung im Bereich des Schneid-Fräsers wirksam vermieden werden kann, was eine gute Schnittqualiltät begünstigt.

Durch die Merkmale des Anspruchs 6 ist ihrem grundsätzlichen Aufbau nach eine pneumatische Hebe-Einrichtung umrissen, mittels derer - durch Einblasen von Druckluft in den Raum zwischen dem Niederhalte-Ring und der Materialbahn ein Anheben derselben bis annähernd in Anlage mit dem Niederhalte-Ring bzw. der Bodenplatte der Hülse möglich, falls die Hebe-Wirkung des rotierenden Fräsers, um diesen in schneidendem Eingriff mit der Materialbahn zu halten, nicht ausreichen sollte.

Wenn die Materialbahn für deren Schneid-Bearbeitung, wie vorstehende erläutert, angehoben wird, so ist es notwendig, die Materialbahn, z. B. an ihren Rändern am Maschinentisch festzulegen, z. B. festzuklemmen oder hinreichend zu beschweren.

Durch die Merkmale des Anspruchs 7 ist eine hierzu alternative Art der Fixierung der Materialbahn am Maschinentisch der Schneidmaschine angegeben, in welchem Falle mit der Zuschneide-Bearbeitung der Materialbahn ein gewisser Ver schleiß an einer der Materialbahn unterlegten, luftdurchlässigen Filzunterlage oder an Borstenbündeln gegeben, an denen die Materialbahn gleichsam punktuell abgestützt ist. Ein derartiger Verschleiß kann jedoch, da die Verschleißteile billig sind und leicht ersetzt werden können, ohne weiteres hingenommen werden, da sich im übrigen eine sehr einfache Gestaltung der Maschine insgesamt ergibt.

Bei der durch die Merkmale des Anspruchs 8 angegebenen Gestaltung der Bohrung, durch die der Fräser mit seinem Mittelabschnitt hindurchtritt, sowie des Fräsers selbst ist auf einfache Weise eine Einstellung der Scherspaltweite zwischen dem Fräser und der Schneidkante der Bohrung und insoweit eine Anpassung der Schneidmaschine an verschiedene Materialbahn-Qualitäten möglich.

Weitere Einzelheiten und Merkmale der Erfindung ergeben sich aus der nachfolgenden Beschreibung spezieller Ausführungsbeispiele anhand der Zeichnung. Es zeigen:

Fig. 1 ein erstes Ausführungsbeispiel einer erfindungsgemäßen Schneidmaschine mit einem Fingerfräser als Schneidwerkzeug in vereinfachter, schematischer Darstellung im Schnitt längs einer die zentrale Fräserachse enthaltenden Ebene,

Fig. 2 die Schneidmaschine gemäß Fig. 1 mit einer zusätzlichen, pneumatischen Hebe-Einrichtung für die der Schnittbearbeitung zu unterwerfende Materialbahn und

Fig. 3 ein weiteres Ausführungsbeispiel einer erfindungsgemäßen Schneidmaschine, bei der die Materialbahn an eine Unterlage angedrückt und dadurch für die Schneid-Bearbeitung hinreichend am Maschinentisch fixiert wird, in einer den Fig. 1 und 2, entsprechenden, vereinfachten Schnittdarstellung.

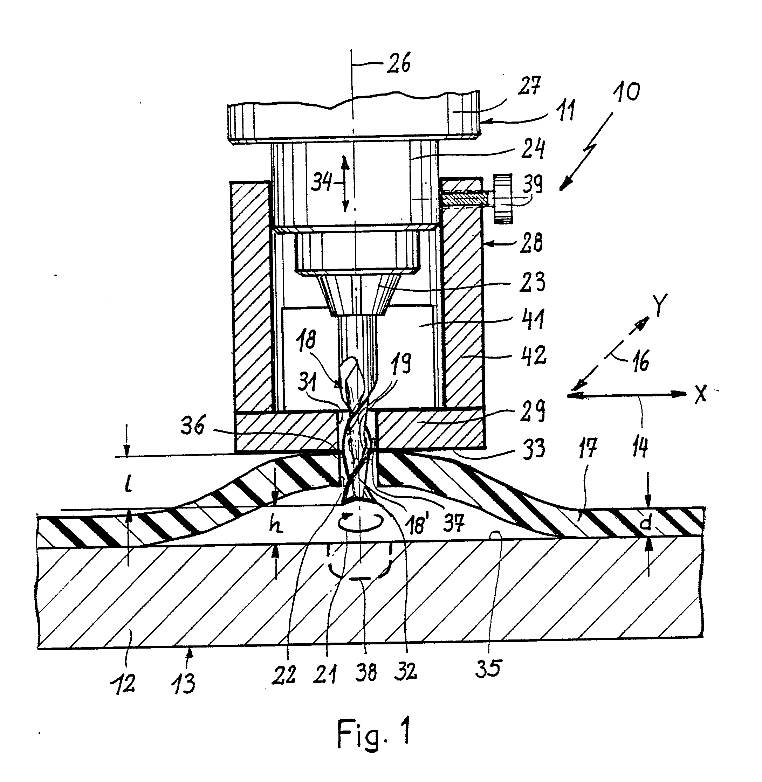

In der Fig. 1, auf deren Einzelheiten ausdrücklich verwiesen sei, ist eine insgesamt mit 10 bezeichnete erfindungsgemäße Schneidmaschine lediglich durch einen Fräskopf 11 und den unterhalb desselben angeordneten Abschnitt eines - horizontalen - Maschinentisches 12 repräsentiert, der seinerseits Teil des im übrigen nicht dargestellten Maschinengestells 13 ist, an welchem der Fräskopf in zwei zueinander rechtwinkligen Koordinatenrichtungen, der als Längsrichtung bezeichneten X-Richtung, die durch den Pfeil 14 repräsentiert ist und der dazu rechtwinkligen Y-Richtung, die durch den gestrichelten Pfeil 16 repräsentiert ist, gesteuert, hin- und herverfahrbar angeordnet ist.

Die Schneidmaschine 10 ist dafür gedacht, aus großflächigen, flexiblen Materialbahnen 17 Stücke mit vorgegebener Kontur selbsttäig gesteuert ausschneiden zu können, wobei diese Materialbahnen 17 z. B. Textilgewebe derjenigen Art sein können, die zur Herstellung von Segeln, Zelten, Markisen, größeren, frei aufstellbaren Sonnenschirmen, Vorzelten für Campingwagen und dergleichen benutzt werden, das heißt Textilgeweben, die relativ fest, gleichwohl flexibel aber weniger lappig sind als Textilgewebe, welche z. B. für die Herstellung von Bekleidungsgegenständen benutzt werden, aber auch zum Ausschneiden von Materialstücken vorgegebener Kontur aus Kunststoff-Folien entsprechender Festigkeit, gegebebenfalls auch aus Packpapier oder dergleichen, das eine relativ hohe Reißfestigkeit hat. Mit der Maschine 10 soll auch eine schneidende Bearbeitung von kunststoffbeschichteten Textilbahnen möglich sein, die eine Dicke um 1 mm bis 3 mm haben.

Als Schneidwerkzeug ist ein Fingerfräser 18 vorgesehen, bei dem der Verlauf seiner spiralenförmig verlaufenden Schneidkanten 19 so gewählt ist, daß die Materialbahn 17, wenn sich der Fräser 18 mit dem durch den Pfeil 21 angegebenen Richtungssinn dreht, angehoben wird.

In typischer Auslegung hat der Fingerfräser 18 einen die Weite der Schnittfuge 22, die aus der Materialbahn 17 "aus gefräst" wird, bestimmenden Durchmesser von 1 bis ca. 3 mm und ist als zwei- oder mehrschneidiger Fräser ausgebildet. Die axiale Länge, auf der der Fräser 18 mit den spiralförmig verlaufenden Fräs- bzw. Schneidkanten 19 versehen ist, beträgt ca. 12 bis 15 mm. Dieser Teil des Fräsers 18 wird nachfolgend als "Schneidabschnitt" bezeichnet.

Der Fingerfräser 18 ist in üblicher Weise in einer Spannzange 23 gehalten, die in dem Gehäuse 24 des Fräskopfes 11 um die vertikale zentrale Achse 26, die auch die Längsachse des Fräsers 18 markiert, drehbar gelagert und mittels des lediglich schematisch angedeuteten Antriebsmotors 27 antreibbar ist.

An dem als außenseitig kreiszylindrisch vorausgesetzten Gehäuse 24, an dem der Fräser 18 drehbar gelagert ist, ist axial verschiebbar und in der jeweils geeigneten Höhe feststellbar eine der Grundform nach zylindrisch-rohrförmige, insgesamt mit 28 bezeichnete Hülse angeordnet, die an ihrer Unterseite durch eine Bodenplatte 29 abgeschlossen ist, welche eine zentrale Bohrung 31 hat, durch welche der freie Endabschnitt des Fingerfräsers 18 nach unten austritt, wobei die zwischen den freien Schneidkanten 32 des Fingerfräsers 18 und der unteren Begrenzungsfläche 33 der Bodenplatte 29 der Hülse 28 gemessene freie Länge l des freien Endabschnittes 18' etwas größer ist als die Dicke d der zu durchschneidenden

Materialbahn und vorzugsweise deren 1,5- bis 2-fachem Wert entspricht.

In praxi beträgt diese freie Länge l des Fingerfräsers 18 2 bis 5 mm.

In der Arbeitsposition ist der Fräskopf 11, der seinerseits in der - vertikalen - durch den Pfeil 34 repräsentierten Z-Richtung als anhebbar und absenkbar vorausgesetzt sein soll, soweit abgesenkt, daß sich die freien Schneidkanten 32 des Fingerfräsers 18 von der Oberseite 35 des Maschinentisches 12, auf der die Materialbahn 17 großflächig aufliegt, in einem lichten Abstand h angeordnet sind, der einige Millimeter, z. B. zwischen 2 und 5 mm beträgt.

Während der Fingerfräser 18 mit seinem freien Endabschnitt die Materialbahn 17 entlang einer vorgegebenen Kontur durchschneidet - "durchfräst" -,wird diese Materialbahn 17 mit ihrem den Fingerfräser 18 unmittelbar umgebenden Bereich - bedingt durch den Windungssinn der spiralförmig verlaufenden Schneidkanten 19 - angehoben und permanent in Anlage mit der unteren Begrenzungsfläche 33 der Bodenplatte 29 der Hülse 28 gehalten. Die die zentrale Bohrung 31 der Bodenplatte 29 gegen deren untere Begrenzungsfläche 33 abgrenzende, kreisrunde Kante 36 ist als scharfkantig geschliffene Schneidkante, die zweckmäßigerweise gehärtet ist, ausgebildet, an der Fasern einer als Textilmaterial ausgebildeten Materialbahn 17 oder Frässpäne einer als Kunststoff-Folie ausgebildeten Materialbahn 17 abgeschnitten oder abgeschert werden.

Um in Kombination mit dem rotierenden Fingerfräser 18 diese Schnitt- bzw- Scher-Wirkung zu erzielen, ist der Durchmesser der zentralen Bohrung 31 nur geringfügig größer gewählt als der effektive Durchmesser des Fingerfräsers 18. In typischer Auslegung ist der Bohrungs-Durchmesser nur wenige Hundertstel Millimeter, z. B. 2 bis 5/100 mm größer als der Fräserdurchmesser.

Um die lichte Weite des zwischen dem Fingerfräser 18 und der zentralen "Bohrung" 31 verbleibenden Ring- bzw. Scherspaltes 37 einstellen zu können, kann es zweckmäßig sein, dem Fräser 18 eine sich zu seinem freien Ende hin schwach konisch verjüngende Form und der zentralen Bohrung 31 eine dazu komplementäre, sich nach oben hin entsprechend erweiternde Form zu geben, sodaß durch axiale Verschiebung der Hülse 28 gegenüber dem Fräser 18 bzw. dem Gehäuse 24 die Weite dieses Scherspaltes 37 eingestellt werden kann.

Bei einem Fräserdurchmesser von 1,6 mm und einer Fräser-Drehzahl um 150 000 U/min konnten bei Materialien der vorgenannten Art sehr präzise und glatte Konturenschnitte erzielt werden, wobei Schnitt-Vorschubgeschwindigkeiten von bis zu 8 m/min ¨gefahren¨ wurden. In Anbetracht der bei diesen relativ hohen Vorschubgeschwindigkeiten guten Schnittqualität kann davonausgegangen werden daß auch noch höhere Vorschub-Geschwindigkeiten ausgenutzt werden können.

Da bei dem anhand der Fig. 1 insoweit erläuterten Ausführungsbeispiel der Schneidmaschine die Materialbahn 17 geringfügig angehoben werden muß, damit der Fräser 18 in genügendem lichten Abstand h von dem Maschinentisch 12 verfahren und die Materialbahn 17 durchschnitten werden kann, muß das ¨Anheben¨ der Materialbahn an einer geeigneten Stelle der Maschine 10 erfolgen können, entweder an einem außerhalb des Maschinentisches 12 liegenden Randabschnitt der Materialbahn, oder aber es ist z. B. am Rand des Maschinentisches 12 eine gestrichelt angedeutete Anstichnut 38 vorgesehen, in deren Bereich der Fräser 18 bzw. der Fräskopf 11 soweit absenkbar ist, daß die Rohmaterialbahn 17 angeschnitten wird, wonach dann der Fräskopf - durch Anheben um einige Millimeter - in seine für die Fortführung des Schnittes 22 entlang der vorgesehenen Kontur geeignete, in der Fig. 1 dargestellten, Arbeitshöhe gebracht wird.

Die Dicke der Bodenplatte 29 der Hülse 28 entspricht in zweckmäßiger Auslegung 1/3 der axialen Länge des Schneidabschnittes des Fingerfräsers 18, auf welcher dieser mit den spiralförmigen Schneidkanten 19 versehen ist. Die Hülse 28 wird zweckmäßigerweise in einer Höhe an dem Gehäuse 24 des Fräskopfes 11 festgelegt, z. B. durch Anziehen der Feststellschraube 39, daß die Bodenplatte 29 jeweils einen mittleren Abschnitt des Fingerfräsers 18 umgibt, das heißt, dessen spiralförmige Schneidkanten 19 auch noch in den Bereich oberhalb der Bodenplatte 29 hineinreichen, in den durch die Rotation des Fräsers 18 die Fräs-Späne oder -Faserteilchen hineintransportiert werden. Oberhalb der Bodenplatte 29 ist die Hülse 28 mit großflächigen Fenster-Ausnehmungen 41 versehen, die sich beidseits der die Bodenplatte 29 an ihrem unteren Ende tragenden Steg 42 über einen mindestens jeweils 90° umfassenden Umfangsbereich der Hülse 28 erstrecken.

Durch diese Fenster-Ausnehmungen 41 können die Fräs-Späne oder -Fasern hinreichend ungehindert ausgeblasen oder abgesaugt werden.

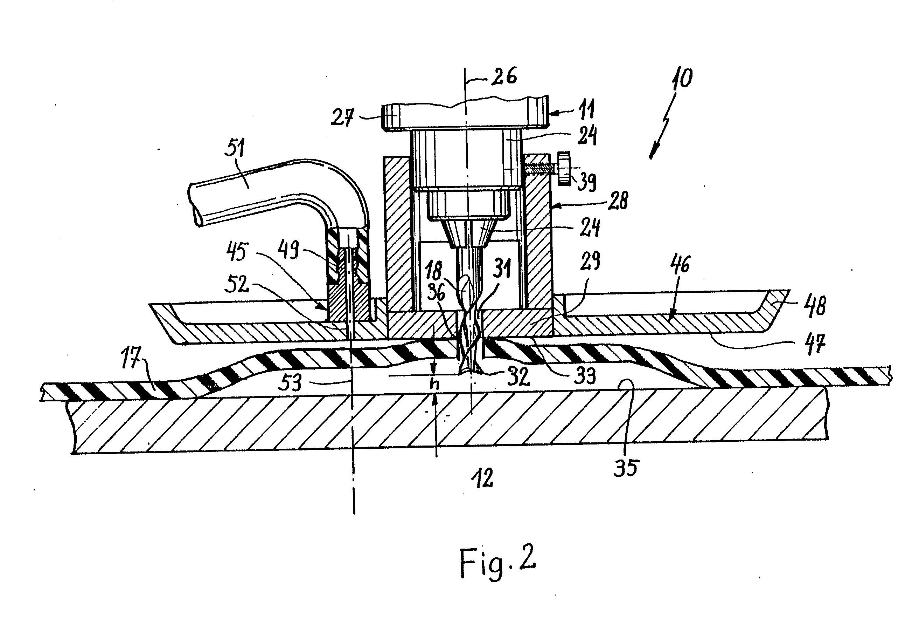

Das in der Fig. 2, auf deren Einzelheiten nunmehr verwiesen sei, dargestellte, weitere Ausführungsbeispiel einer erfindungsgemäßen Schneidmaschine 10 unterscheidet sich von demjenigen gemäß Fig. 1 lediglich dadurch, daß eine insgesamt mit 45 bezeichnete Anhebe-Einrichtung vorgesehen ist, mittels derer die für die Schnitt-Bearbeitung vorgesehene -flexible - Materialbahn 17 im Bereich des Fräsers 18 entweder zeitweise, z. B. durch Durchführung des Anschnittes oder bei Bedarf auch permanent anhebbar ist, so daß der Fräser 18 bzw. der Fräskopf 11 von vorneherein in der vorgesehenen Arbeitshöhe gehalten werden kann, in welcher zwischen den freien Schneidkanten 32 des Fräsers und der Oberseite 3 des Maschinentisches 12 der lichte Abstand h vorhanden ist.

Soweit in der Fig. 2 Elemente der Schneidmaschine 10 mit denselben Bezugszeichen belegt sind, wie Elemente der Schneidmaschine 10 gemäß Fig. 1, soll dadurch, um Wiederholungen zu vermeiden, auf die diesbezüglichen, zu der Fig. 1 gehörenden Beschreibungsteile verwiesen sein, ohne daß diese Elemente eigens noch einmal erwähnt werden.

Bei dem Ausführungsbeispiel gemäß Fig. 2 ist an die Hülse 28, durch deren Bodenöffnung 31 der Fingerfräser 18 hindurchtritt, ein flach-tellerförmiger Niederhalte-Ring 46 angesetzt, der in typischer Dimensionierung einen Außendurchmesser von 10 - 15 cm hat. Dieser Niederhalte-Ring 46 hat eine planebene, horizontal untere Begrenzungsfläche 47, welche zentral glatt an die untere, ebenfalls ebene Begrenzungsfläche 33 der Bodenplatte 29 der Hülse 28 anschließt. Der äußere Rand 48 des Niederhalte-Ringes 46 ist mit glatter Krümmung, wie der Fig. 2 entnehmbar, nach oben aufgewölbt, um Beschädigungen der Materialbahn 17, über die der Niederhalte-Ring 46 zusammen mit dem Fräskopf 11 hinweggeführt wird, zu vermeiden.

Durch diesen Niederhalte-Ring 46 werden im Bereich des Fräsers wellenförmige Aufwölbungen oder Faltenbildungen der Materialbahn 17 vermieden.

Unmittelbar neben der Hülse 28 ist, im radial inneren Bereich des Niederhalte-Ringes 46, eine Anschlußtülle 49 für einen Preßluft-Zuführungsschlauch 51 vorgesehen, deren -vertikaler - Preßluft-Durchlaßkanal an eine Düsenöffnung 52 des Niederhalte-Ringes 46 anschließt, durch die über den Preßluft-Zuführungsschlauch 51 zuführbare Preßluft nach unten austreten kann.

Sobald und solange aus dieser Düsenöffnung 52 Preßluft austritt, die mit relativ hoher Strömungsgeschwindigkeit mit bezüglich der - vertikalen - zentralen Achse 53 der Austrittsdüse 52 radialem Strömungsverlauf zwischen dem Niederhalte-Ring 46 und der zunächst auf dem Maschinentisch 12 aufliegenden Materialbahn 17 abströmt, tritt - wegen der unterschiedlichen Strömungsgeschwindigkeiten der Luft oberhalb der Materialbahn 17, wo die Luft eine hohe Strömungsgeschwindigkeit hat, und unterhalb der Materialbahn 17, wo die Luft praktisch ˝steht˝, jedenfalls wenn die Materialbahn hinreichend luftdicht ist, was vorausgesetzt sein soll, ein Druckgefälle auf, dahingehend, daß der Luftdruck oberhalb der Materialbahn 17 niedriger als unterhalb der Materialbahn 17 ist. Dies hat zur Folge, daß die Materialbahn 17 zwischen dem Niederhalte-Ring 46, das heißt dessen Unterseite 47 und der Bodenplatte 29 der Hülse 28 einerseits und andererseits den unterhalb diesem Fräskopf fest angeordneten Teilen angeordneten Bereich des Maschinentisches 12 angehoben wird und dadurch der Fräser 18 in schneidenden Eingriff mit der Materialbahn 17 gelangt und in dieser Eingriffsstellung gehalten wird.

Soweit hiernach die durch den rotierenden Fräser 18 und dessen Eingriff mit der Materialbahn 17 erzielte Hub-Wirkung ausreicht, um die Materialbahn 17 im Schnittbereich in Anlage mit der unteren Begrenzungsfläche 33 der Bodenplatte 29 der Hülse und gegegebenfalls den diesen unmittelbar umgebenden Bereich des Niederhalte-Ringes 46 zu halten, kann die Preßluft-Zufuhr, die ein gleichsam ˝einleitendes˝ Anheben der Materialbahn 17 vermittelt hatte, wieder abgeschaltet werden. Ist dies nicht der Fall, so kann durch fortgesetzte Preßluft-Zufuhr über den Schlauch 51 und die Anschlußtülle 49 zu der Austrittsdüse 52 diese pneumatische Anhebung der Materialbahn 17 aufrechterhalten werden.

Diese Anhub-Einrichtung 45 ermöglicht es somit, eine konventionelle Fräsmaschine, das heißt eine Fräsmaschine, die keiner speziellen Gestaltung des Maschinentisches 12 bedarf, für die schneidende Bearbeitung von Materialbahnen 17 der erwähnten Art zu verwenden.

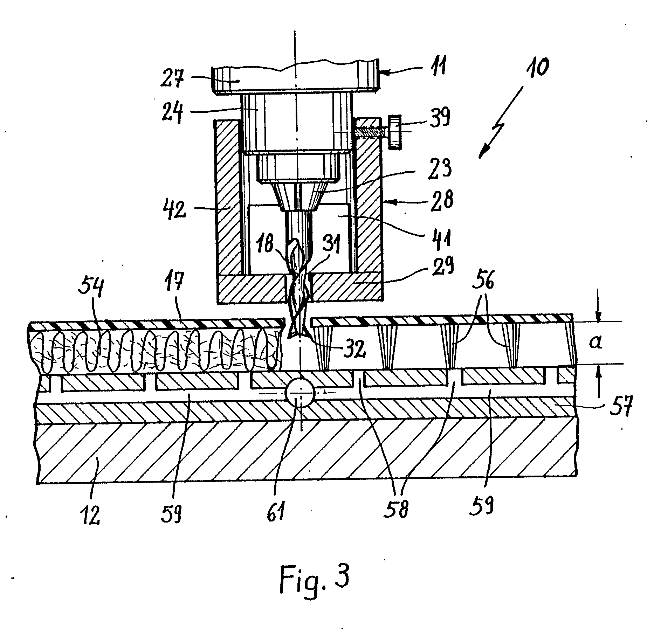

Auch bei dem in der Fig. 3, auf deren Einzelheiten nunmehr verwiesen sei, dargestellten, weiteren Ausführungsbeispiel einer erfindungsgemäßen Schneidmaschine 10 ist für deren Fräskopf 11 und die an diesen angesetzte Hülse 28 derselbe Aufbau vorgesehen, wie anhand der Fig. 1 und 2 bereits geschildert. Demgemäß soll wiederum durch die Verwendung derselben Bezugszeichen wie in den Fig. 1 und 2 auf die die Erläuterung der solchermaßen bezeichneten Elemente betreffenden Beschreibungsteile verwiesen sein.

Auch beim Ausführungsbeispiel gemäß Fig. 3 wird vorausgesetzt, daß die Materialbahn soweit ˝luftdicht˝ ist, daß unterhalb derselben mit gängigen Mitteln, z. B. einem üblichen - nicht dargestellten - Sauggebläse ein hinreichender Unterdruck erzeugt werden kann, der ausreichend ist, um die Materialbahn 17 derart fest in Anlage mit ihrer jeweiligen Unterlage zu halten, daß sie durch die Schneidbearbeitung mittels des Fräsers 18 nicht verschoben werden kann.

Die Materialbahn 17 ist hier entweder wie im linken Teil der Fig. 3 dargestellt über eine luftdurchlässige Materialschicht, z. B. eine Filzschicht 54 großflächig, oder, wie im rechten Teil der Fig. 3 dargestellt, über in einem regelmäßigen Raster verteilt angeordnete, nachgiebige Borstenbündel 56, gleichsam "punktuell" unterstützt und durch diese im Abstand a von der Oberseite einer Düsenplatte 57 ge halten, welche in regelmäßiger Verteilung über ihre Fläche an ihrer Oberseite mündende Saugdüsen 58 hat, welche mit Abluftkanälen 59 in kommunizierender Verbindung stehen, die ihrerseits mit einem Saugstutzen 61 der Düsenplatte 57 kommunizieren, der an die Saugseite eines - nicht dargestellten - Sauggebläses anschließbar ist. Die Düsenplatte 57 liegt, wie dargestellt, auf dem Maschinentisch 12 auf und kann erforderlichenfalls an diesem unverrückbar befestigt werden.

Mittels des Sauggebläses in dem Raum zwischen der Materialbahn 17 und der Oberseite der Düsenplatte 57 erzeugbarem Unterdruck wird die Materialbahn 17 hinreichend fest an ihre Filz-Unterlage angedrückt, bzw. in Anlage mit den Borstenbündeln 56 gehalten, um eine Schneid-Bearbeitung in der vorstehend erläuterten Weise zu ermöglichen.

Es versteht sich, daß in Kombination mit dem Fräskopf 11 auch ein Niederhalte-Ring 46 vorgesehen werden kann, wie anhand er Fig. 2 erläutert. Es ist auch möglich, den Fräskopf 11 mit geringer Andruckkraft in Anlage der Bodenplatte 29 seiner Hülse 28 sowie gegebenenfalls des Niederhalterings 46 mit der Oberseite der Materialbahn 17 zu halten, damit die Materialbahn im Bereich des Fräsers 18 nicht ¨nach oben¨ ausweichen kann.

**Ansprüche**

1. Schneidmaschine für die Herstellung von Zuschnitten vorgegebener Konturen aus einer großflächigen Bahn eines flexiblen Materials, insbesondere einer Textilstoffbahn, die hinsichtlich ihrer Festigkeit eine einem Segel- oder Zelttuch entsprechende Qualität hat, oder einer Kunststoffbahn hiermit vergleichbarer Flexibilität udn Festigkeit mit einem mittels eines Koordinatenwagens selbsttätig gesteuerten, entlang der vorgesehenen Schnittkon-tur verfahrbaren Schneidkopf, dadurch gekenn-zeichnet daß, der Schneidkopf als Fräskopf (11) ausgebildet ist, dessen Fräser ein Fingerfräser (18) ist, dessen - spiralförmig verlaufende-Schneidkanten (19) bezüglich der Schnittrichtung eine ansteigende Orientierung haben, und daß der Fräser (18) mit seinem, oberhalb seines für die Schnittbearbeitung der Materialbahn (17) ausgenutzten, freien Endabschnittes (18′) angeordneten Mittelabschnitt durch eine mit seiner zentralen Längsachse (26) koaxiale Bohrung (31) einer an dem Gehäuse (24) des Fräskopfes (11) festlegbaren Platte (29) hindurchtritt, deren zentraler, die Bohrung (31) an der Fräser-Austrittsseite umrandender Bereich als scharfe Scherkante (36) ausgebildet ist.

2. Schneidmaschine nach Anspruch 1, dadurch gekennzeichnet, daß der in der Ebene der Scherkante (36) gemessene Durchmesser der Bohrung (31) nur geringfügig - zwischen 5/100 und 2/100 mm - größer ist als der Nenndurchmesser des Fräsers (18).

3. Schneidmaschine nach Anspruch 1 oder Anspruch 2, dadurch gekennzeichnet daß der Nenndurchmesser des Fingerfräsers (18) zwischen 1,2 mm und 3 mm, vorzugsweise zwischen 1,6 mm und 2 mm beträgt und daß der Fräser mit einer Drehzahl zwischen 100 000 und 200 000 U/min antreibbar ist.

4. Schneidmaschine nach einem der vorhergehenden Ansprüche, dadurch gekennzeichnet daß die Bohrung (31) durch die der Fingerfräser (18) hindurchtritt, an der Bodenplatte (29) einer topfformigen Hülse (28) angeordnet ist die mit ihrem Mantel an einer mit der zentralen Achse (26) des Fräskopfes (11) koaxialen Mantelfläche seines Gehäuses (24) höhenverstellbar geführt und an diesem festlegbar ist, und daß die Hülse (28) oberhalb der Bodenplatte (29) mit Fenster-Ausnehmungen (41) versehen ist, deren untere Ränder in Höhe der oberen Begrenzungsfläche der Bodenplatte (29) verlaufen, deren azimutale Weite - bei axial symmetrischer Anordnung bezüglich der Längsachse (26) - insgesamt mindestens und etwa 180° beträgt, und deren axiale Ausdehnung zwischen 10 mm und 20 mm beträgt, wobei der Innendurchmesser der Hülse (28) in dem die Fensteröffnungen (41) aufweisenden, unteren Bereich seinerseits zwischen 30 mm und 50 mm beträgt.

5. Schneidmaschine nach einem der vorhergehenden Ansprüche, dadurch gekennzeichnet, daß der Fräskopf (11) mit einem flach-tellerförmigen Niederhalte-Ring (46) versehen ist, dessen untere, ebene Begrenzungsfläche (47) koplanar mit der unteren, horizontalen Begrenzungsfläche (33) der die Bohrung (31) aufweisenden Platte (29) angeordnet ist und unmittelbar an diese anschließt, wobei der Außendurchmesser dieses Niederhalte-Ringes (46) zwischen 10 cm und 20 cm, vorzugsweise zwischen 12 cm und 15 cm beträgt.

6. Schneidmaschine nach einem der vorhergehenden Ansprüche,
dadurch gekennzeichnet, daß an der mit der zentralen Bohrung (31) versehenen Platte (29) und/oder an einem der zentralen Achse (26) des Fräskopfes (11) nahen, radial inneren Bereich des Niederhalte-Ringes (46) eine Düsenöffnung (52) vorgesehen ist, über die Druckluft in den Raum zwischen dem Niederhalte-Ring (46) und der Materialbahn (17) einblasbar ist.

7. Schneidmaschine nach einem der vorhergehenden Ansprüche 1 bis 5,
dadurch gekennzeichnet, daß die der Schnittbearbeitung unterwerfbare Materialbahn (17) die Abdeckung eines flachen, an seiner Unterseite durch den Maschinentisch (12) begrenzten Raum bildet, innerhalb dessen die Materialbahn (17) großflächig durch ein luftdurchlässiges Filz-Material oder punktuell in einem regelmäßigen Raster durch bürstenförmige Stützelemente (56) unterstützt ist, und daß in diesem Raum ein für die Fixierung der Materialbahn (17) am Maschinentisch (12) hinreichender Unterdruck erzeugbar ist.

8. Schneidmaschine nach einem der vorhergehenden Ansprüche,
dadurch gekennzeichnet, daß der Fingerfräser (18) eine sich zu seinem freien Ende hin konisch verjüngende Form hat, derart, daß die Schneidkanten (19) entlang der Mantelfläche eines spitzwinkligen Konus verlaufen, und daß die Bohrung (31), durch die der Fräser (18) hindurchtritt, eine zur konischen Form des Fräsers komplementäre, sich nach oben hin konisch erweiternde Form hat, wobei die Platte (29), an der diese Bohrung angeordnet ist, höhenverstellbar an dem Fräskopf (11) angeordnet ist.

Fig. 1

P8855
3 Blatt 2

Fig.2

P 88 55
3 Blatt 3

Fig. 3